# EUROPÄISCHE PATENTSCHRIFT

(11) **EP 0 452 546 B1**
(45) Veröffentlichungstag und Bekanntmachung des Hinweises auf die Patenterteilung: **04.05.1994**
(21) Anmeldenummer: 90122162.2
(22) Anmeldetag: 20.11.1990
(51) Int. Cl.: F16J 15/00, F16J 15/32

(54) **Radialwellendichtring**
Rotory shaft seal
Bague à lèvres

(30) Priorität: 14.04.1990 DE 4012160
(43) Veröffentlichungstag der Anmeldung: 23.10.1991
(73) Patentinhaber: Firma Carl Freudenberg, 69469 Weinheim (DE)
(72) Erfinder: Dahlhaus, Ulrich, W-6803 Edingen (DE); Vogt, Rolf, W-6836 Oftersheim (DE)

(56) Entgegenhaltungen:
- DE-A- 2 842 694
- FR-A- 2 559 231
- GB-A- 2 138 081

## Beschreibung

Die Erfindung betrifft einen Radialwellendichtring, umfassend einen Stützring mit L-förmigem Profil und einem in radialer Richtung nach innen vorspringenden Schenkel, an dem eine Hauptdichtung aus polymerem Werkstoff festgelegt ist sowie eine der Hauptdichtung in Richtung des abzudichtenden Raumes A vorgeschaltete Filtrationseinrichtung zur Abscheidung von Feststoffen, die die Welle dichtend berührt, wobei der Zwischenraum zwischen der Hauptdichtung und der Filtrationseinrichtung mit einem schmierend wirkenden Stoff gefüllt ist.

Ein solcher Radialwellendichtring ist aus DE-A-23 63 715 bekannt. Die Filtrationseinrichtung besteht dabei aus einem der Hauptdichtung vorgeschalteten Sieb, welches im mittleren Bereich ein Dichtelement hat und mit der Welle zusammenwirkt. Sie vermag Feststoffe, die in dem abzudichtenden Medium enthalten sind, nur während einer unzureichenden Zeitspanne von der Hauptschaltung fernzuhalten.

Der Erfindung liegt die Aufgabe zugrunde, einen solchen Radialwellendichtring derart weiterzuentwickeln, daß in dem abzudichtenden Medium enthaltene Feststoffe während einer wesentlich vergrößerten Gebrauchsdauer von der Hauptdichtung ferngehalten werden.

Diese Aufgabe wird erfindungsgemäß bei einem Radialwellendichtring der eingangs genannten Art dadurch gelöst, daß die Filtrationseinrichtung aus einer radial elastischen, flüssigkeitsundurchlässigen Dichtlippe besteht, die die abzudichtende dichtende Welle mit einer Zylinderfläche in radialem Abstand D umschließt, daß der durch Abstand D gebildete Spalt von kapillaraktiver Enge ist, daß in den Spalt wenigstens eine aus der Zylinderfläche radial nach innen vorspringende Dichtkante hineinragt mit einer radialen Höhe, die kleiner ist als die radiale Weite des Spaltes, daß die Dichtkante die Welle sinusförmig verlaufend auf ihrem gesamten Umfang umschließt und zumindest das dem abzudichtenden Raum A zugewandte, axiale Ende der Zylinderfläche in regelmäßig wiederkehrenden Umfangsabständen erreicht und daß die Dichtlippe radial außerhalb der Zylinderfläche ein keilförmig von dem abzudichtenden Raum A zurückspringendes Profil aufweist. Der Spalt zwischen der Dichtlippe und der Oberfläche der abzudichtenden Welle ist durch die kapillaraktive Enge stets mit schmierend wirkenden Stoff bzw. abzudichtenden Medium gefüllt, was einem Verschleiß der Dichtkante in gutem Maße vorbeugt. Dabei ist es von besonderer Bedeutung, daß sich das in dem Spalt befindende Medium bei drehender Welle stets in einer Relativbewegung befindet, welche umfangsgerichtete und axialgerichtete Bewegungskomponenten in sich einschließt. Aus dem Bereich des abzudichtenden Raumes auf den Spalt auftreffende, feste Partikel werden dadurch nicht nur an einem Eindringen in den Spalt gehindert, sondern zusätzlich den Umfangsstellen zugeführt, an denen die Dichtkante das dem abzudichtenden Raum zugewandte, axiale Ende der Zylinderfläche erreicht. Die Dichtlippe weist radial außerhalb der Zylinderfläche ein keilförmig von dem abzudichtenden Raum A zurückspringendes Profil auf. Insbesondere im Bereich der vorstehend angesprochenen Umfangsstellen ergibt sich dadurch eine gute, radial nach außen gerichtete Ablenkung der von dem Spalt abgewiesenen Partikel, und es wird angenommen, daß maßgeblich hierauf die wesentlich verbesserte Gebrauchsdauer des erfindungsgemäßen Radialwellendichtringes zurückzuführen ist.

Die der Dichtlippe nachgeschaltete Hauptdichtung kann mit einer in Richtung der Dichtlippe wirksamen, hydrodynamisch wirksamen Fördereinrichtung für das abzudichtende Medium versehen sein. Der hierdurch in dem Zwischenraum zwischen der Hauptdichtung und der Dichtlippe erzeugte Druck kann ein gewisses Abheben der Dichtkante der Dichtlippe von der Oberfläche der abzudichtenden Welle verursachen, was die Erzielung einer noch weiter verbesserten Gebrauchsdauer begünstigt. Der diesbezügliche Effekt tritt besonders deutlich in Erscheinung, wenn nur die Hauptdichtung durch eine Ringwendelfeder aus metallischem Werkstoff an die abzudichtende Welle angepreßt ist und wenn hinsichtlich der Anpressung der Dichtlippe an die abzudichtende Welle keine derartigen Ringwendelfeder zur Anwendung gelangt. Bereits beim neuwertigen Radialwellendichtring ergibt sich hierdurch eine vergleichsweise stärkere Anpressung der Hauptdichtung an die abzudichtende Welle, bezogen auf die Dichtlippe. Der diesbezügliche Unterschied wird mit fortschreitender Gebrauchsdauer vergrößert durch die nur im Bereich der Dichtlippe zu beobachtenden, Relaxationserscheinungen des sie bildenden, gummielastischen Werkstoffes.

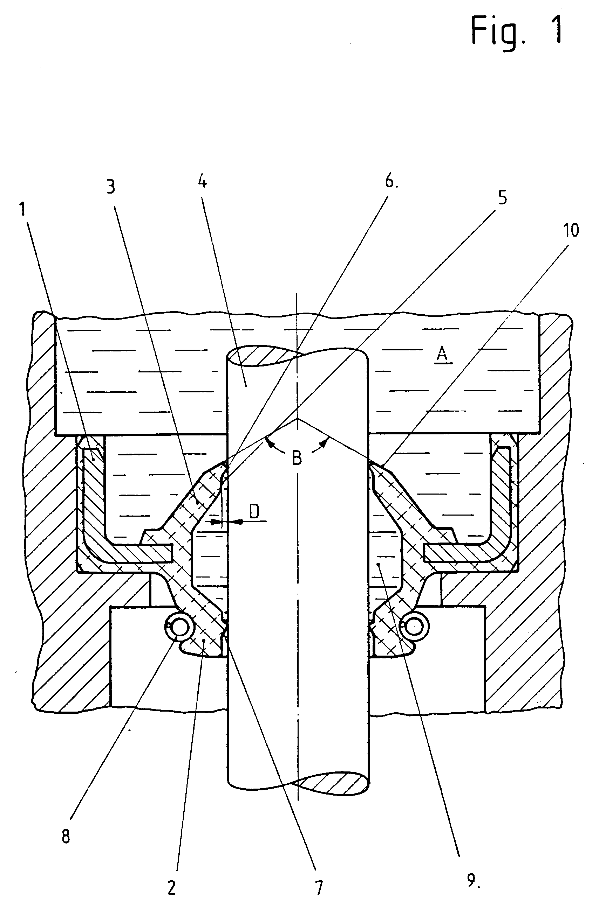

Der erfindungsgemäße Radialwellendichtring eignet sich besonders gut für ölüberflutete Dichtstellen senkrecht angeordneter Wellen. Das bevorzugte Anwendungsgebiet sind Dichtstellen im Bodenbereich von ölenthaltenden Gehäusen. Der Gegenstand der Erfindung wird anhand der in der Anlage beigefügten Zeichnungen weiter verdeutlicht. Es zeigen:
Figur 1
   Ein Radialwellendichtring der erfindungsgemäßen Art im eingebauten Zustand.
Figur 2
   Den Radialwellendichtring gemäß Figur 1 in längsgeschnittener Darstellung.

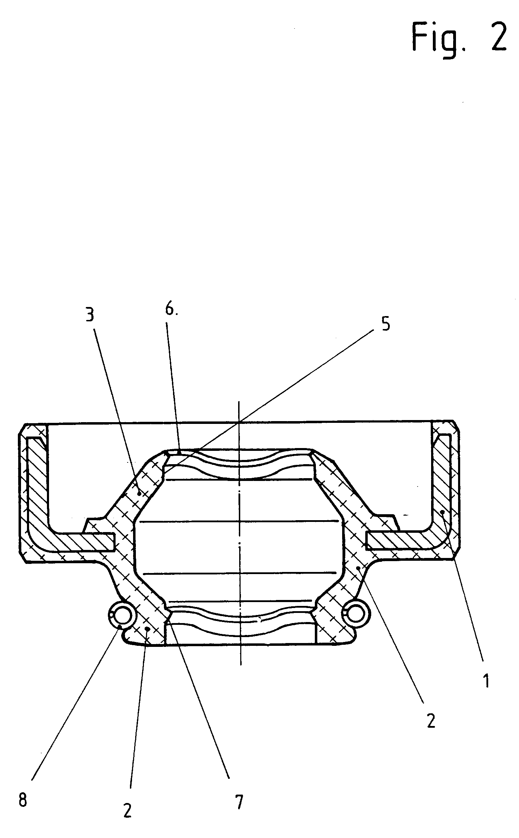

Der in Figur 1 im eingebauten Zustand wiedergegebene Radialwellendichtring ist im Bodenbereich eines ölgefüllten Gehäuses an einer Wandungsstelle angeordnet, durch die eine Welle 4 senkrecht hindurchgeführt wird. Der Radialwellendichtring umfaßt einen Stützring 1 mit L-förmigem Profil und einem in radialer Richtung nach innen vorspringenden Schenkel, an dem eine Hauptdichtung 2 aus polymerem Werkstoff festgelegt ist sowie eine der Hauptdichtung 2 in Richtung des abzudichtenden Raumes A vorgeschaltete Filtrationseinrichtung zur Abscheidung von Feststoffen, wobei der Zwischenraum 9 zwischen der Hauptdichtung 2 und der Filtrationseinrichtung mit einem schmierend wirkenden Stoff gefüllt ist, beispielsweise mit einem Schmierfett. Die Filtrationseinrichtung besteht aus einer radialelastischen, flüssigkeitsundurchlässigen Dichtlippe 3, die aus gummielastischem Werkstoff besteht und einstückig mit der Hauptdichtung 2 ausgebildet ist. Die Dichtlippe 3 umschließt die abzudichtende Welle mit einer Zylinderfläche 5 in radialem Abstand D, wobei der durch den Abstand D gebildete Spalt von kapillaraktiver Enge ist und wobei in den Spalt eine aus der Zylinderfläche 5 in radialer Richtung nach innen vorspringende Dichtkante 6 radial hineinragt. Die Dichtkante 6 umschließt die Welle 4 sinusförmig verlaufend auf ihrem gesamten Umfang (Figur 2), wobei das dem abzudichtenden Raum A zugewandte, axiale Ende der Zylinderfläche 5 in regelmäßig wiederkehrenden Umfangsabständen erreicht wird. Die radiale Höhe ist geringer als die radiale Weite des Spaltes bei drehender Welle. Sie beträgt wenigstens das 0,5-fache des Wertes der radialen Weite. Die Dichtlippe 3 weist an dem dem abzudichtenden Raum A zugewandten, axialen Ende der Zylinderfläche 5 beginnend ein von dem abzudichtenden Raum A keilförmig zurückspringendes Profil auf. Die hierdurch gebildete, die Dichtlippe 3 außenseitig umschließende Kegelfläche 10 weist ein Kegelwinkel von 60 bis 120 Grad auf, vorzugsweise ein Kegelwinkel von 80 bis 100 Grad.

Die Hauptdichtung 2 ist durch eine Ringwendelfeder 8 aus metallischem Werkstoff an die Oberfläche der abzudichtenden Welle 4 angepreßt. Bedingt durch die weitgehende Relaxationsfreiheit des die Ringwendelfeder 8 bildenden, metallischen Werkstoffes ist über lange Zeiträume eine ausgeglichene Anpressung der Hauptdichtung 2 an die Oberfläche der abzudichtenden Welle 4 gewährleistet.

Die Hauptdichtung 2 ist innenseitig mit einem hydrodynamisch wirksamen Rückförderelement 7 versehen, durch welches aus der Richtung des abzudichtenden Raumes A auftreffendes, abzudichtendes Medium bei sich drehender Welle 4 in Richtung des abzudichtendes Raumes A zurückgefördert wird. Das hydrodynamisch wirkende Rückförderelement 7 umschließt die Welle 4 anliegend auf ihrem gesamten Umfang. Es hat bei unsymmetrischem Profil einen sinusförmigen Verlauf und ist auf einer Zylinderfläche der Hauptdichtung 2 angeordnet.

Zur Funktion ist folgendes auszuführen:
Der Spalt zwischen der Zylinderfläche 5 und der abzudichtenden Welle 4 ist aufgrund seiner kapillaraktiven Enge bei Wellenstillstand stets mit abzudichtendem Medium gefüllt. Dieses wird bei drehender Welle einerseits durch deren umfangsgerichtete Relativbewegung und andererseits durch den sinusförmigen Verlauf der Dichtkante 6 einerseits in eine umfangsgerichtete und andererseits in eine axial gerichtete Hin- und Herbewegung versetzt. Das in dem Spalt enthaltene Flüssigkeitsvolumen wird dadurch kontinuierlich erneuert und Umfangsstellen zugeführt, an denen die Zylinderfläche 5 und die Kegelfläche 10 einander durchschneiden. Aus der Richtung des abzudichtenden Raumes A auf den Spalt auftreffende Feststoff-Partikel werden hierdurch den angesprochenen Stellen kontinuierlich zugeführt und über die Kegelfläche 10 in radialer Richtung nach außen abgelenkt. Sie vermögen sich nicht im Bereich des Spaltes festzusetzen und eine Beschädigung der angrenzenden Flächen zu bewirken. Gleichwohl vermag abzudichtendes Medium den Spalt axial in Richtung des Zwischenraumes 9 zu passieren und die Hauptdichtung 2 zu erreichen. Die für eine lange Gebrauchsdauer erforderliche Schmierung der Hauptdichtung 2 ist dadurch stets gewährleistet.

## Patentansprüche

1. Radialwellendichtring, umfassend einen Stützring (1) mit L-förmigem Profil und einem in radialer Richtung nach innen vorspringenden Schenkel, an dem eine Hauptdichtung (2) aus polymerem Werkstoff festgelegt ist sowie eine der Hauptdichtung (2) in Richtung des abzudichtenden Raumes A vorgeschaltete Filtrationseinrichtung (3) zur Abscheidung von Feststoffen, die die Welle dichtend berührt, wobei der Zwischenraum (9) zwischen der Hauptdichtung (2) und der Filtrationseinrichtung (3) mit einem schmierend wirkenden Stoff gefüllt ist, dadurch gekennzeichnet, daß die Filtrationseinrichtung aus einer radialelastischen, flüssigkeitsundurchlässigen Dichtlippe (3) besteht, die die abzudichtende Welle mit einer Zylinderfläche (5) in radialem Abstand (D) umschließt, daß der durch den Abstand (D) gebildete Spalt von kapillaraktiver Enge ist, daß in den Spalt wenigstens eine aus der Zylinderfläche (5) radial nach innen vorspringende Dichtkante (6) hineinragt mit einer radialen Höhe, die geringer ist als die radiale Weite des Spaltes, daß die Dichtkante (6) die Welle (4) sinusförmig verlaufend auf ihrem gesamten Umfang umschließt und zumindest das dem abzudichtenden Raum (A) zugewandte, axiale Ende der Zylinderfläche (5) in regelmäßig wiederkehrenden Umfangsabständen erreicht und daß die Dichtlippe (3) radial außerhalb der Zylinderfläche (5) ein von dem abzudichtenden Raum (A) keilförmig zurückspringendes Profil aufweist.

2. Radialwellendichtring nach Anspruch 1, dadurch gekennzeichnet, daß die der Dichtlippe (3) nachgeschaltete Hauptdichtung (2) mit einer in Richtung der Dichtlippe (3) wirksamen, hydrodynamischen Fördereinrichtung (7) für das abzudichtende Medium versehen ist.

3. Radialwellendichtring nach Anspruch 2, dadurch gekennzeichnet, daß nur die Hauptdichtung (2) durch eine Ringwendelfeder (8) aus metallischem Werkstoff an die abzudichtende Welle (4) angepreßt ist.

4. Radialwellendichtring nach Anspruch 2 bis 3, dadurch gekennzeichnet, daß die Hauptdichtung (2) mit einer größeren Kraft an die abzudichtende Welle (4) angepreßt ist als die Dichtlippe (3).

5. Verwendung eines Radialwellendichtringes nach Anspruch 1 bis 4 im Bereich einer Dichtstelle einer senkrecht angeordneten Welle (4), die mit Öl überflutet ist.

## Claims

1. A radial shaft seal, comprising a support ring (1) with an L-shaped profile and a limb which projects inwards in the radial direction and on which a main seal (2) made of polymer material is fixed as well as a filtering device (3) for separating solids which is disposed upstream of the main seal (2) in the direction of the space A to be sealed off and contacts the shaft in a sealing manner, the interspace (9) between the main seal (2) and the filtering device (3) being filled with a substance acting in a lubricating manner, characterised in that the filtering device is composed of a radially elastic sealing lip (3) which is impermeable to liquid and with a cylindrical surface (5) at a radial spacing (D) surrounds the shaft to be sealed off, in that the gap formed by the spacing (D) has a capillary active narrowness, in that at least one sealing edge (6) projecting radially inwards from the cylindrical surface (5) protrudes into the gap with a radial height which is less than the radial width of the gap, in that the sealing edge (6) surrounds the shaft (4), running sinusoidally over its entire circumference, and reaches at least the axial end of the cylindrical surface (5) facing the space (A) to be sealed off in regularly recurrent circumferential intervals, and in that radially outside the cylindrical surface (5) the sealing lip (3) has a profile which is set back in a wedge shape from the space (A) to be sealed off.

2. A radial shaft seal according to claim 1, characterised in that the main seal (2) disposed downstream of the sealing lip (3) is provided with a hydrodynamic conveying device (7) for the medium to be sealed off, said conveying device acting in the direction of the sealing lip (3).

3. A radial shaft seal according to claim 2, characterised in that only the main seal (2) is pressed by a helical spring (8) of metallic material against the shaft (4) to be sealed off.

4. A radial shaft seal according to either of claims 2 and 3, characterised in that the main seal (2) is pressed with a greater force than the sealing lip (3) against the shaft (4) to be sealed off.

5. The use of a radial shaft seal according to any of claims 1 to 4 in the region of the sealing point of a vertically arranged shaft (4) which is flooded with oil.

## Revendications

1. Bague d'étanchéité radiale pour arbres, comportant un anneau de support (1) ayant un profil en forme de L ainsi qu'une ailette faisant saillie radialement vers l'intérieur et sur laquelle est maintenu un joint principal d'étanchéité (2) formé d'un matériau polymère, ainsi qu'un dispositif de filtration (3), situé avant le joint principal d'étanchéité (2) dans la direction du volume à étancher A et servant à séparer des substances solides, ce dispositif étant en contact étanche avec l'arbre et le volume intermédiaire (9) existant entre le joint principal d'étanchéité (2) et le dispositif de filtration (3) étant rempli d'une substance à effet lubrifiant, caractérisée en ce que le dispositif de filtration se compose d'une lèvre d'étanchéité (3), radialement élastique, imperméable au liquide et qui entoure l'arbre à étancher par une surface cylindrique (5) et avec espacement radial D, en ce que l'intervalle créé par l'espacement D a une étroitesse à action capillaire, en ce que dans l'intervalle pénètre au moins un bord d'étanchéité (6), faisant saillie radialement vers l'intérieur à partir de la surface cylindrique (5), avec une hauteur radiale qui est plus petite que la largeur radiale de l'intervalle, en ce que le bord d'étanchéité (6) entoure l'arbre (4) avec une forme sinusoïdale et sur tout son pourtour et atteint au moins l'extrémité axiale, dirigée vers le volume à étancher A, de la surface cylindrique (5) à intervalles circonférenciels se répétant régulièrement, et en ce que la lèvre d'étanchéité (3) comporte, radialement à l'extérieur de la surface cylindrique (5), un profil s'écartant brusquement en forme de coin du volume à étancher A.

2. Bague d'étanchéité radiale pour arbres selon la revendication 1, caractérisée en ce que le joint principal d'étanchéité (2), situé après la lèvre d'étanchéité (3), est pourvu d'un dispositif hydrodynamique de refoulement (7) pour le fluide à étancher, qui agit en direction de la lèvre d'étanchéité (3).

3. Bague d'étanchéité radiale pour arbres selon la revendication 2, caractérisée en ce que seulement le joint principal d'étanchéité (2) est appliqué par un ressort spiral annulaire (8), formé d'un matériau métallique, contre l'arbre (4) à étancher.

4. Bague d'étanchéité radiale pour arbres selon l'une des revendications 2 et 3, caractérisée en ce que le joint principal d'étanchéité (2) est appliqué contre l'arbre (4) à étancher avec une plus grande force que la lèvre d'étanchéité (3).

5. Utilisation d'une bague d'étanchéité radiale pour arbres, selon l'une des revendications 1 à 4, dans une zone d'étanchéité d'un arbre (4) disposé verticalement, cette zone d'étanchéité étant noyée dans l'huile.
